# EUROPEAN PATENT APPLICATION

(11) **EP 4 019 891 A1**
(43) Date of publication of application: **29.06.2022**
(21) Application number: 21216415.6
(22) Date of filing: 21.12.2021
(51) Int. Cl.: G01B 11/25

(54) **THREE-DIMENSIONAL SCANNER WITH EVENT CAMERA**

(30) Priority: 22.12.2020 US 202063129216 P
(71) Applicant: Faro Technologies, Inc., Lake Mary, FL 32746-6204 (US)
(72) Inventor: HEIDEMANN, Rolf, 70825 Korntal-Münchingen (DE); WOLKE, Mathias, 70825 Korntal-Münchingen (DE)
(74) Representative: Harris, Oliver John Richard

(57) **Abstract**

According to one aspect of the disclosure, a three-dimensional coordinate scanner is provided. The scanner includes a projector configured to emit a pattern of light; a sensor arranged in a fixed predetermined relationship to the projector, the sensor having a photosensitive array comprised of a plurality of event-based pixels, each of the event-based pixels being configured to transmit a signal in response to a change in irradiance exceeding a threshold. One or more processors are electrically coupled to the projector and the sensor, the one or more processors being configured to modulate the pattern of light and determine a three-dimensional coordinate of a surface based at least in part on the pattern of light and the signal.

## Description

### CROSS REFERENCE TO RELATED APPLICATIONS

This application claims the benefit of U.S. Provisional Application Serial No. 63/129,216, filed December 22, 2020, the entire disclosure of which is incorporated herein by reference.

### BACKGROUND

The subject matter disclosed herein relates to a coordinate measurement device or scanner, and in particular to a coordinate measurement device or scanner having an event based camera

Optical scanning systems are used for measuring coordinates of points on a surface of an object. These devices use trigonometry and epipolar geometry to determine a distance from the object using a pattern of light emitted by a projector. The device includes a sensor, such as a photosensitive array, that receives light reflected from the surface of the object. By knowing or determining the pose of the device and the distance to the object, three-dimensional coordinates of the object may be determined. Examples of these types of devices includes laser line probes, laser line scanners, flying dot scanners, area scanners, triangulation scanners, and structured light scanners.

One limiting factor on these devices is the speed at which the images acquired by the sensor can be processed. In the case of a photosensitive array, the entire array needs to be read and evaluated before the distance may be determined. It should be appreciated that with modern photosensitive arrays, the number of pixels may be quite large. Further, the values of the pixels (e.g. the value of the accumulated charge) are read or retrieved sequentially on a row by row basis. As a result, before the next image is acquired, the previous frame/image needs to be acquired, retrieved from the sensor, and analyzed to determine the distance to the object.

Accordingly, while existing coordinate scanners are suitable for their intended purposes the need for improvement remains, particularly in providing a coordinate scanner having the features described herein.

### BRIEF DESCRIPTION OF THE DISCLOSURE

According to one aspect of the disclosure, a three-dimensional coordinate scanner is provided. The scanner includes a projector configured to emit a pattern of light; a sensor arranged in a fixed predetermined relationship to the projector, the sensor having a photosensitive array comprised of a plurality of event-based pixels, each of the event-based pixels being configured to transmit a signal in response to a change in irradiance exceeding a threshold. One or more processors are electrically coupled to the projector and the sensor, the one or more processors being configured to modulate the pattern of light and determine a three-dimensional coordinate of a surface based at least in part on the pattern of light and the signal.

In addition to one or more of the features described herein, or as an alternative, further embodiments of the scanner may the one or more processors being configured to modulate the intensity of the pattern of light.

In addition to one or more of the features described herein, or as an alternative, further embodiments of the scanner may include the one or more processors being configured to modulate the locations of the pattern of light.

In addition to one or more of the features described herein, or as an alternative, further embodiments of the scanner may include the signal having a pixel ID and a timestamp. In addition to one or more of the features described herein, or as an alternative, further embodiments of the scanner may include the timestamp being the time that a row of the photosensitive array that the pixel is located in was read. In addition to one or more of the features described herein, or as an alternative, further embodiments of the scanner may include the row having a first pixel and a second pixel, each of which has a charge that exceeds the threshold, the timestamp for the first pixel and the second pixel being the same. In addition to one or more of the features described herein, or as an alternative, further embodiments of the scanner may include the timestamp being the time that the accumulation of charge in the pixel exceeded the threshold.

In addition to one or more of the features described herein, or as an alternative, further embodiments of the scanner may include the light pattern being a doublet pattern, and the projector is configured to control the light intensity of the doublet patter with respect to time.

In addition to one or more of the features described herein, or as an alternative, further embodiments of the scanner may include the projector being configured to project a first plane of light that forms a first line of light on the surface of the object. In addition to one or more of the features described herein, or as an alternative, further embodiments of the scanner may include the projector being further configure to project a second plane of light that forms a second line of light on the surface of the object. In addition to one or more of the features described herein, or as an alternative, further embodiments of the scanner may include the one or more processors being configured to cause the projector to modulate the intensity of the first plane of light and the second plane of light.

In addition to one or more of the features described herein, or as an alternative, further embodiments of the scanner may include the average intensity of the modulation being greater than or equal to 20% of a maximum intensity of the projector.

In addition to one or more of the features described herein, or as an alternative, further embodiments of the scanner may include the modulating of the intensity turning off at least one of the first plane of light or the second plane of light on a periodic or aperiodic basis.

In addition to one or more of the features described herein, or as an alternative, further embodiments of the scanner may include the first line of light and the second line of light overlapping

In addition to one or more of the features described herein, or as an alternative, further embodiments of the scanner may include the pattern of being is a structured light pattern.

In addition to one or more of the features described herein, or as an alternative, further embodiments of the scanner may include a tracking camera having a second photosensitive array that includes a plurality of second event-based pixels each of the event-based pixels being configured to transmit a second signal in response to an accumulation of charge exceeding a second threshold, wherein the one or more processors is further configured to identify a feature on the object in response to the second signal.

In addition to one or more of the features described herein, or as an alternative, further embodiments of the scanner may include the feature being a reflective target affixed to the surface.

In addition to one or more of the features described herein, or as an alternative, further embodiments of the scanner may include a light source operably coupled to the tracking camera, the light source being configured to emit light at a predetermined frequency. In addition to one or more of the features described herein, or as an alternative, further embodiments of the scanner may include the tracking camera having at least one optical element that allows light of the predetermined frequency to pass through and substantially blocks light of other frequencies. In addition to one or more of the features described herein, or as an alternative, further embodiments of the scanner may include In addition to one or more of the features described herein, or as an alternative, further embodiments of the scanner may include the predetermined frequency being in the infrared light spectrum.

In addition to one or more of the features described herein, or as an alternative, further embodiments of the scanner may include the one or more processors being further configured to determine three-dimensional coordinates based at least on part on an amount of time between a first event and a second event, wherein there are no events between the first event and the second event.

In addition to one or more of the features described herein, or as an alternative, further embodiments of the scanner may include the amount of time being based at least in part on a first time stamp of the first event and a second time stamp of the second event. In addition to one or more of the features described herein, or as an alternative, further embodiments of the scanner may include an encoder operably coupled to the one or more processors, wherein the encoder measures one of a speed of the object being scanned or the speed of the scanner relative to the object.

In addition to one or more of the features described herein, or as an alternative, further embodiments of the scanner may include a registration of three-dimensional coordinates generated at different timestamps is based at least in part on a relative position between the scanner and an object being measured.

According to another aspect of the disclosure a three-dimensional coordinate scanner is provided. The scanner including a projector configured to emit a pattern of light. A sensor is arranged in a fixed predetermined relationship to the projector, the sensor having a photosensitive array arranged to receive light reflected from a surface of the object. A light source is operably coupled to the projector and the sensor. At least one tracking camera is operably coupled to the light source and arranged to receive light emitted by the light source and reflected off of the surface of the object, the at least one tracking camera having a photosensitive array comprised of a plurality of event-based pixels, each of the event-based pixels being configured to transmit a signal in response to an accumulation of charge exceeding a threshold. One or more processors are electrically coupled to the projector and the sensor, the one or more processors being configured determine a three-dimensional coordinate of a surface based at least in part on the pattern of light and to determine a pose of the scanner based at least in part on the signal.

These and other advantages and features will become more apparent from the following description taken in conjunction with the drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic view of a three-dimensional coordinate scanner in accordance with an embodiment;
FIG. 2A is a schematic view of an event based image sensor or photosensitive array in accordance with an embodiment;
FIG. 2B is a schematic view of a pixel for use in the image sensor or photosensitive array of FIG. 2A;
FIG. 2C is an illustration of example triggering events for the pixel of FIG. 2B;
FIG. 3A is a perspective view of the three-dimensional coordinate scanner of FIG. 1 in combination with a conveyor belt system at a first time step in accordance with an embodiment;
FIG. 3B is a perspective view of the system of FIG. 3A at a second time step in accordance with an embodiment;
FIG. 4A is a graphical illustration of the level irradiance over time at a pixel of the scanner of FIG. 1 in accordance with an embodiment;
FIG. 4B is a graphical illustration of irradiance and an intensity maximum through a plurality of pixels in accordance with embodiment;
FIG. 4C is a schematic illustration of a sensor array in accordance with an embodiment;
FIG. 4D and FIG. 4E are graphical illustrations of an example irradiance and an intensity maximum through a plurality of pixels in accordance with other embodiments; and
FIG. 5A and FIG. 5B illustrate a three-dimensional coordinate scanner having an event-based tracking camera in accordance with an embodiment.

The detailed description explains embodiments of the disclosure, together with advantages and features, by way of example with reference to the drawings.

### DETAILED DESCRIPTION OF THE DISCLOSURE

Embodiments of the present disclosure provide advantages in increasing the speed acquiring data with a coordinate measurement device.

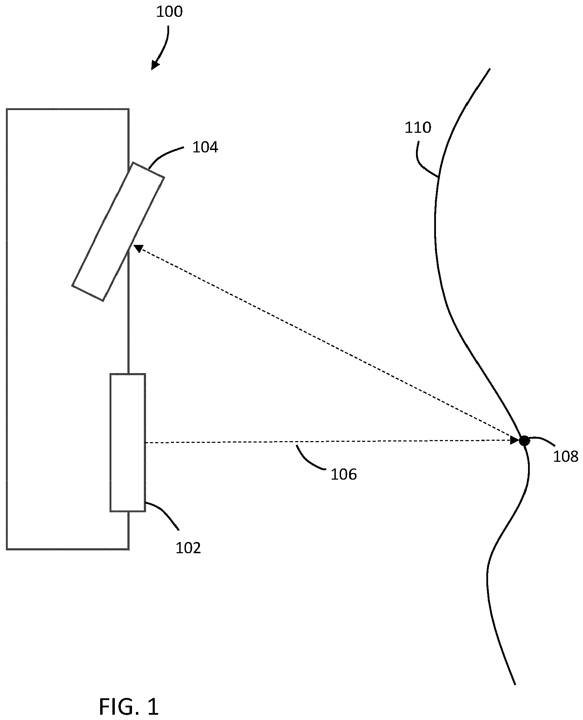

Referring to FIG. 1, an embodiment is shown of a three-dimensional line scanner 100. The scanner includes a projector 102 that is disposed in a fixed relationship with an optical sensor 104. In an embodiment, the projector includes a light source and associated optics for projecting a plane of light 106 that generates a line of light 108 on a surface 110 of an object being scanned. The light 106 strikes the surface 110 and a portion of the reflected light 112 is received by the optical sensor 104.

Since the projector 102 and the optical sensor 104 are a coupled in a fixed geometric position to each other, three-dimensional (3D) coordinates of points on the surface where the line of light 108 strikes may be determined using trigonometric principals.

It should be appreciated that while embodiments herein may refer to a scanner 100 projecting a line of light, sometimes referred to as a laser line probe or a line scanner, this is for example purposes and the claims should not be so limited. In other embodiments, other types of optical scanners may be used, including but not limited to: a triangulation scanner, a flying-spot scanner, a structured light scanner, a photogrammetry device, a laser tracker device, and a theodolite for example.

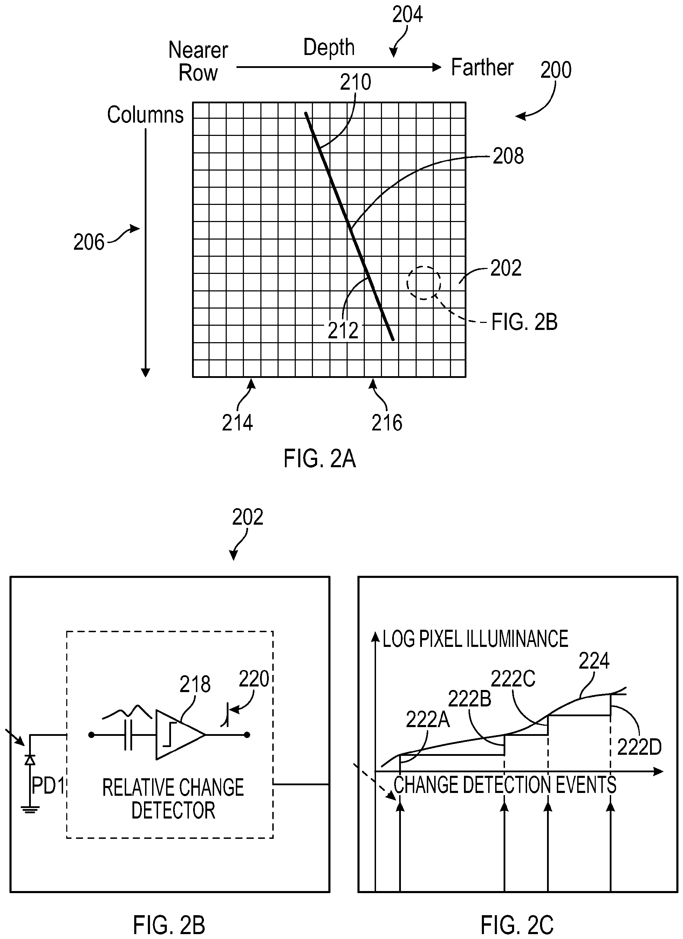

Referring now to FIG. 2A - 2C, an embodiment of the optical sensor 104 is shown. In this embodiment, the optical sensor 104 includes an image sensor or a photosensitive array 200 having a plurality of photosensitive elements, such as pixels 202 for example, that are arranged in rows 204 and columns 206. It should be appreciated that the term image sensor or photosensitive array may be used interchangeably herein. As will be discussed in more detail herein, the pixels 202 are event-based pixels that generate an event or signal in response to a difference in irradiance being equal to or greater than a threshold. When the projector 104 emits the plane of light 106 to generate the line 108 on the surface 110, a line 208 is imaged by the photosensitive array 200. It should be appreciated that while the illustrated embodiment shows the line 208 as being a continuous straight line, this is for example purposes and in other embodiments, the line 208 formed by the reflected light may have different shapes depending on the shape of the surface 110.

The position of the line 208 on the array 200, in combination with the baseline distance between the projector 102 and the sensor 104, may be used to determine the depth or distance from the scanner 100 to the points on the surface where line 108 strikes as is described in commonly owned United States Patent Application Serial No. 17/073,923 (Atty. Docket FAO0989US4), the contents of which are incorporated by reference herein. For example, when the line of light 208 crosses a pixel (e.g. pixel 210) closer to the left side (when viewed from the position of FIG. 2A), the corresponding point on the line 108 on the surface 110 is closer to the scanner 10, than a pixel rather to the right (e.g. pixel 212). The determination of depth for a line of light may be such as that described in aforementioned United States Patent Application Serial No. 17/073923. It should be appreciated that each pixel in the photosensitive array has an associated distance to the object surface and an angular value.

In operation, when the optical sensor 104 opens the shutter, light reflected from the surface 110 is received by pixels, which accumulate charge. In a traditional photosensitive array, when the shutter closes, each pixel in the photosensitive array is read to determine a value of the accumulated charge. The value is proportional to the number of photons per unit time received by the pixel, which is proportional to the irradiance (power per unit area) received by that pixel. It should be appreciated that reading each of the pixels is relatively time consuming and is one of the limiting factors in the speed of acquisition of 3D coordinates for points on the surface 110. Further, the reading of each pixel generates a large amount of data. For example, typically a 1 megapixel to a 10 megapixel image sensor may typically be used. It should be appreciated that reading, transmitting, analyzing and storing 1,000,000 to 10,000,000 values may be relatively time consuming to transfer, store, and computationally process.

It should be appreciated that the array 200 is exemplary and that the pixels are illustrated as being large relative to the line 208. This is for purposes of clarity and typically the width of the line 208 is larger than the width of the pixels.

In the illustrated embodiment, the array 200 includes event-based pixels 202. As used herein, an event-based pixel transmits a signal when a change or difference in the irradiance exceeds a threshold. Further, in an event-based image sensor, the array 200 is read row by row, accordingly if a row, such as row 214 for example, have no pixels where the line 208 crosses, there would be no data read. In a row, such as row 216 for example, only a single pixel (e.g. 212) would read out data. It should be appreciated that for each reading of the array 200 results in less data than in a traditional photosensitive array.

Referring to FIG. 2B, a schematic is shown of an individual pixel 202. Each pixel 202 includes a comparator 218. In an embodiment, the irradiance at a pixel (which is proportion to the number of photons received at a pixel) is converted to electrical current in the photoreceptor, this electrical current is amplified to a voltage proportional to log(irradiance) and a differencing circuit within the comparator 218 transforms this into a voltage proportional to the change of log(irradiance). Finally, the comparator determines whether the irradiance is increasing or decreasing. It should be appreciated that while the comparator 218 is illustrated as being a single component, this is for example purposes and the comparator circuit may be comprised of a plurality of electrical components. When the relative change in the irradiance detected is greater than a threshold, such as 20% change for example, the pixel 202 emits a signal 220. In an embodiment, when the relative change in irradiance is greater than a threshold, an event is generated by the comparator and stored until the pixel is read In the example embodiment, the signal 220 includes a pixel identification (ID). The pixel ID may be a unique identifier or an x,y coordinate for the pixel. In other another embodiment the signal 200 may include the pixel ID and a time stamp when the event was generated. In still other embodiments, the signal 200 may include the pixel ID, a time stamp, and a polarity (e.g increasing or decreasing irradiance). In still other embodiments, the signal may include an irradiance level. In one embodiment, the time stamp associated with the pixel ID is the time at which the row in which the pixel located was read.

Referring to FIG. 2C, an example is illustrated where a signal is generated 222A, 222B, 222C, 222D based on the change in the irradiance 224.

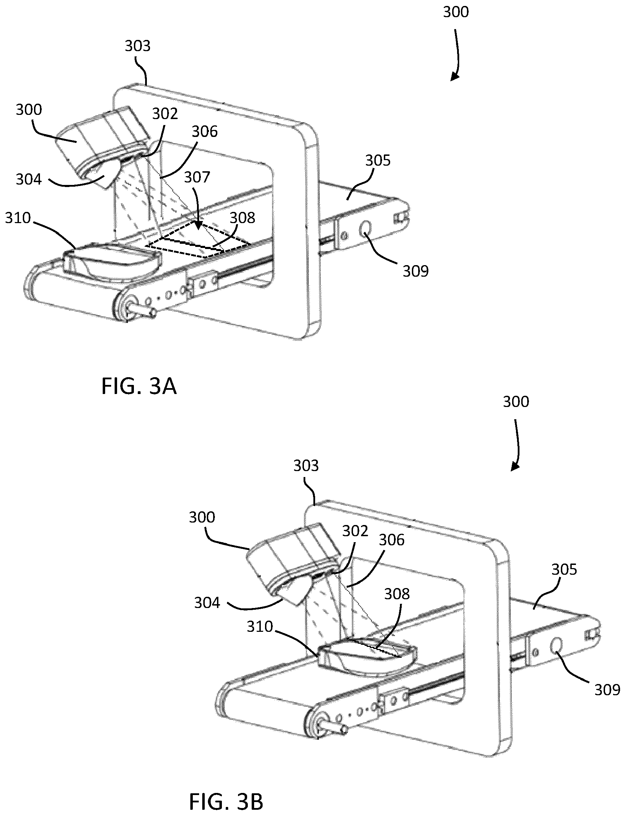

Referring now to FIG. 3A and FIG. 3B, an embodiment is shown of a system 301 for scanning objects 310. In this embodiment, the scanner 300 is coupled to a frame 303 to hold the scanner in a fixed position relative to a movement system, such as conveyor belt 305. The conveyor belt 305 is configured to move the object 310 into a field of view 307 of the optical sensor 304 of scanner 300. In an embodiment, a speed measurement device, such as a rotary encoder 309 for example, that measures the speed at which the conveyor 305 is moving the object 310. The field of view 307 is arranged such that the line of light 308 formed by the plane of light 306 emitted by the projector 302 is imaged by the optical scanner 304.

One characteristic of the optical sensor 304 having an event-based photosensitive array (e.g. array 200) is that when the line 308 is projected onto a substantially flat surface (e.g. conveyor 305), where there is little change in irradiance of the reflected light (e.g. less than or equal to 20% differential), the optical sensor 304 will not generate an event. It should be appreciated that this provides a technical benefit in reducing a computational load on the one or more processors of the scanner 300. When there is a change in height relative to the conveyor belt surface 305, such as when the object 310 enters the field of view 307 and the line 308 is projected onto a surface of the object 310. As discussed in more detail herein, a row of the photosensitive array is read when one of the pixels generates an event. Each event has an associated time stamp and pixel location. In some embodiments, the event may also include a polarity (e.g. irradiance is increasing or decreasing). It should be appreciated that it is contemplated that other types of event-based sensors may be used that scan the entire sensor for events simultaneously. It is further contemplated that still other types of event-based sensors may be used wherein the pixels transmit a signal when the event occurs, rather than being read by the processor.

When scanning the object 310, the optical sensor 304 will only generate data when there is a change in irradiance at least one pixel on the object 310 that is greater than the threshold (e.g. a change in brightness that is greater than or equal to 20%). As discussed in more detail, this change in irradiance may occur due to the line of reflected light moving relative to the pixel. For example, if the object 310 is a flat plate, the optical sensor 304 will generate data at the leading edge of the object 310 when the conveyor belt 305 moves the leading edge into the field of view 307 and intersects the line 308. This change in height between the conveyor belt 305 and the plate will result in the line on the photosensitive array moving (relative to the pixels) from the left to the right (when the array is viewed from the view point of FIG. 2A) as the distance between the surface and the scanner decreases. Since the surface being measured is flat, the line of light on the photosensitive array will not substantially move relative to the pixels (e.g. no change in surface height to cause the line to move relative to the pixels). Therefore, the irradiance on the pixels will no substantially (e.g. <20% difference). As a result, the optical sensor 304 will not generate any additional events (e.g. the surface is flat) until the trailing edge moves past the line 308. It should be appreciated that even though the optical sensor 304 is not generating an event, three-dimensional coordinates of the surface of object 310 may be determined by combining or fusing the data (or lack thereof) with the speed data from the rotary encoder 309. In other words, the system may be able to calculate three-dimensional coordinates for flat surfaces in between events. By detecting the leading edge and trailing edge of the plate, along with the speed of the conveyor, the length of the plate/object can be determined.

It should be appreciated that in some embodiments, it may be desirable to at least periodically measure the 3D coordinates of a flat surface, such as to verify that the scanner is operating correctly for example. In an embodiment, scanner may modulate the brightness of the plane of light 306 to cause a change in the brightness of the line 308. When the modulation of the emitted light is greater than the threshold for triggering an event (e.g. greater than or equal 20% change), this will cause each of the pixels that the line of light crosses to generate an event, even though the line did not move relative to the pixels. In an embodiment, the modulation of the line 308 is accomplished by projecting a second line that periodically overlaps with the line 308 to change the brightness. In still another embodiment, the measurement of a flat surface is to periodically shift/move the line 308 spatially. The movement of the line 308 on the surface will cause the line to move on the photosensitive array, resulting in the generation of an event by the pixels.

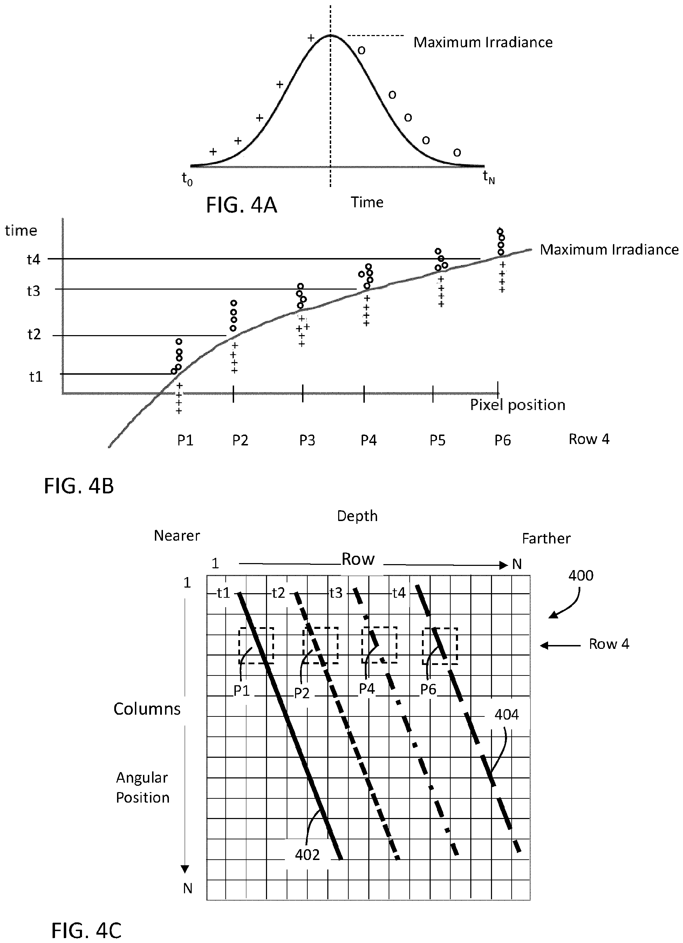

Referring now to FIGS. 4A - 4C, an embodiment of the operation of the photosensitive array 400 of the optical sensor for the scanner will be described. As described herein, the width of the beam of light (e.g. the reflection of the line of light 108, 308) is larger than the width of the pixel. Thus, if we consider a line that is moving towards and across a pixel, such as when the distance to the object is changing for example, the irradiance at that pixel (over time) will resemble a Gaussian curve, such as that shown in FIG. 4A. It should be appreciated that the shape of the curve in FIG. 4A is an example, and in other embodiments the shape of the curve may change based on factors such as the relative speed of movement between the scanner and the object for example. When the center of the line crosses near or at the center of the pixel, the maximum irradiance level should be received by the pixel. It should be appreciated that the rate of change of the irradiance may be sufficient multiple times as the beam approaches and then recedes from the pixel. This is represented in FIG. 4A and FIG. 4B by the "+" and "o" symbols with each of the "+" symbols representing a positive or increasing rate of change (positive polarity) in irradiance event (e.g. the pixel generates a signal), and each "o" symbol represents a negative or decreasing change (negative polarity) in the irradiance event.

By tracking each event, both increasing and decreasing, as the line of light moves towards and away from the pixel, the maximum irradiance point may be determined. It should be appreciated that in some embodiments, the maximum irradiance point may be extrapolated since the time of the shutter opening may not correspond with the center of the line of light passing over the center of the pixel. This determined maximum irradiance level at each time step may be plotted based on pixel position for a given row as shown in FIG. 4B. It should be appreciated that the "movement" of the line of light corresponds to a change in distance from the scanner to the object surface. So in the example of FIG. 4C, at time t1, the center of the line of light 402 is crossing the pixel P1 and the distance from the scanner to the object surface increases (e.g. the line light moves from left to right) from t1 - t4 where the center of the line of light 404 crosses the center of pixel P6 in Row 4.

As discussed herein, the event-based pixels only generate a signal when the change in irradiance is equal to or exceeds a threshold (e.g. 20%). Thus each of the pixels in Row 4, using the example of FIG. 4A-4C, may only generate approximately eight - ten signals, as opposed to a signal for each closing of the shutter. Typically, prior art laser line scanners operated at 100 - 300 frames per second with the array having between 1,000,000 to 10,000,000 pixels in each frame. It should be appreciated that the use of an event-based pixel results in a dramatic reduction in the amount of data that is transferred from the photosensitive array to the processors that determine the three-dimensional coordinates. Further, since less data is generated, it is contemplated that the optical sensor 104, 304 may operate at up to 800 frames per second, thus improving the resolution of the scan data.

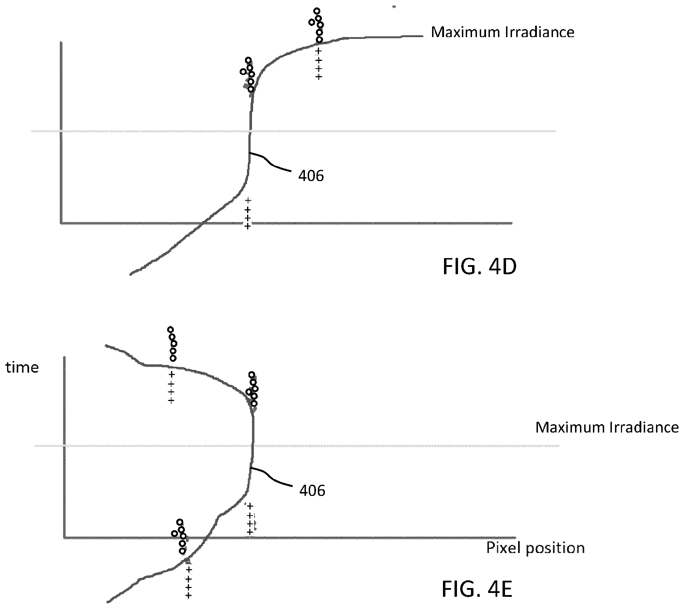

FIG. 4D and FIG. 4E illustrate the maximum irradiance curves for a row of pixels (e.g. Row 4) over time for different shaped objects. In the embodiments of FIG. 4D and FIG. 4E, the curve becomes vertical 406 for some periods of time, indicating a flat surface on the object. The curve of FIG. 4E is an example of an object where the surface moves father away (e.g. a groove), then flattens and subsequently moves closer again.

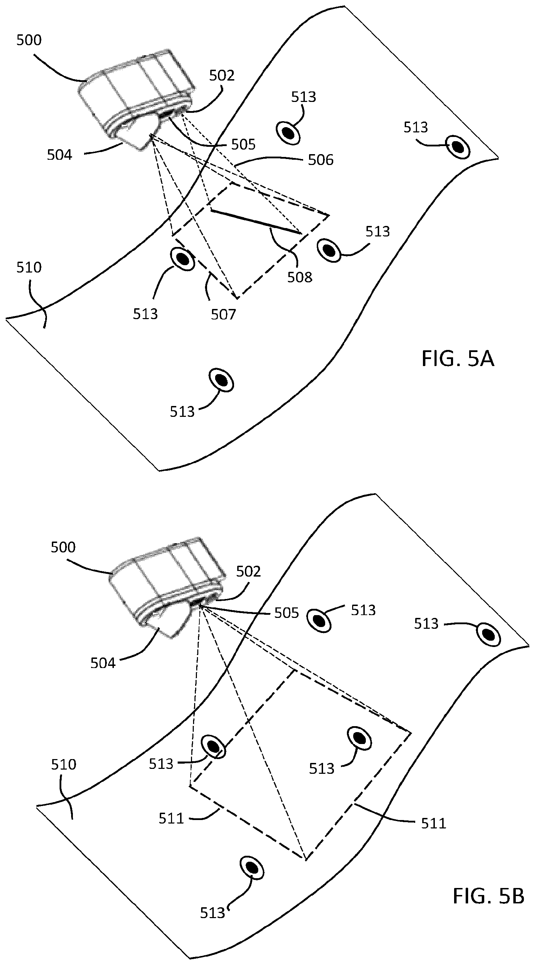

In some embodiments, the scanner may include a second optical sensor or camera, sometimes referred to as a tracking or a texture camera. Referring now to FIG. 5A and FIG. 5B, an embodiment is shown of a scanner 500 having a projector 502, a first optical sensor 504 and a second optical sensor 505. The projector 502 and the first optical sensor 504 may be the same as the projector 102, 302 and the optical sensor 104, 304 as described herein. The projector 502 projects a plane of light 506 that forms a line of light 508 on the surface 510 of the object being scanned.

The first optical sensor 504 includes a field of view 507 that is larger than (e.g. encompasses) the line of light 508. The light reflected from the surface by the line of light 508 is received by the optical sensor 504. In this embodiment, the optical sensor 504 may have an event-based photosensitive array or traditional photosensitive array.

The second optical sensor 505 includes a photosensitive array having event-based pixels. In an embodiment, the second optical sensor 505 may operate in the same manner as photosensitive array 200, 400. In other words, the pixels only generate a signal when the change in irradiance exceeds a threshold. In an embodiment, the second optical sensor 505 may include optical elements, such as filters for example, that allow light from a predetermined wavelength to pass onto the photosensitive array. In an embodiment, the optical elements allow infrared light to pass therethrough. In an embodiment, the scanner 500 may include a light source configured to emit light of the predetermined wavelength (e.g. infrared).

The second optical sensor 505 has a field of view 511. In an embodiment, the field of view may be larger than the field of view 507. In this embodiment, a plurality of reflective targets or markers 513 are coupled to the surface 510. In an embodiment the targets 513 are configured to reflect light of a predetermined wavelength threshold, such as an infrared wavelength for example. In an embodiment, the reflective wavelength of the targets 513 cooperates with the optical-elements/filters of the second optical sensor 505. The second optical sensor 505 may operate synchronously or asynchronously with the first optical sensor 504.

The second optical sensor 505 acquires images in the field of view that includes one or more targets 513. Since the targets 513 are in a fixed relative to each other, the images of the targets 513 acquired by the second optical sensor 505 may be used for tracking the movement of the scanner 500 relative to the surface 510. As a result, the three-dimensional coordinates acquired by the scanner 500 may be registered into a common coordinate frame of reference. Since the second optical sensor 505 includes an event-based image sensor, the images acquired by the second optical sensor 505 may be acquired and computationally processed at a higher rate than provided in prior art systems. As a result, the tracking of the scanner 500 may be performed at a higher rate that provides the technical solution of improving the accuracy of the tracking of scanner 500 since the scanner 500 will move a smaller distance between adjacent image frames.

The term "about" is intended to include the degree of error associated with measurement of the particular quantity based upon the equipment available at the time of filing the application. For example, "about" may include a range of ± 8% or 5%, or 2% of a given value.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The terms "a plurality" are understood to include any integer number greater than or equal to two, i.e. two, three, four, five, etc. The term "connection" can include an indirect "connection" and a direct "connection." It should also be noted that the terms "first", "second", "third", "upper", "lower", and the like may be used herein to modify various elements. These modifiers do not imply a spatial, sequential, or hierarchical order to the modified elements unless specifically stated.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A three-dimensional coordinate scanner comprising:
a projector configured to emit a pattern of light; a sensor arranged in a fixed predetermined relationship to the projector, the sensor having a photosensitive array comprised of a plurality of event-based pixels, each of the event-based pixels being configured to transmit a signal in response to a change in irradiance exceeding a threshold; and
one or more processors electrically coupled to the projector and the sensor, the one or more processors being configured to modulate the pattern of light and determine a three-dimensional coordinate of a surface based at least in part on the pattern of light and the signal.

2. The scanner of claim 1, wherein the one or more processors are configured to modulate the intensity of the pattern of light.

3. The scanner of claim 1, wherein the one or more processors are configured to modulate the locations of the pattern of light.

4. The scanner of claim 1, wherein the signal includes a pixel ID and a timestamp.

5. The scanner of claim 4, wherein:
the timestamp is the time that a row of the photosensitive array that the pixel is located in was read; and
the row includes a first pixel and a second pixel, each of which has a charge that exceeds the threshold, the timestamp for the first pixel and the second pixel being the same.

6. The scanner of claim 4, wherein the timestamp is the time that the accumulation of charge in the pixel exceeded the threshold.

7. The scanner of claim 1, wherein the light pattern is a doublet pattern, and the projector is configured to control the light intensity of the doublet patter with respect to time.

8. The scanner of claim 1, wherein the projector is configured to project a first plane of light that forms a first line of light on the surface of the object.

9. The scanner of claim 8, wherein:
the projector is further configure to project a second plane of light that forms a second line of light on the surface of the object; the one or more processors are configure to cause the projector to modulate the intensity of the first plane of light and the second plane of light;
the average intensity of the modulation is greater than or equal to 20% of a maximum intensity of the projector; and
the modulating of the intensity includes turning off at least one of the first plane of light or the second plane of light on a periodic or aperiodic basis;
preferably wherein the first line of light and the second line of light are overlapping

10. The scanner of claim 1, further comprising a tracking camera having a second photosensitive array that includes a plurality of second event-based pixels each of the event-based pixels being configured to transmit a second signal in response to an accumulation of charge exceeding a second threshold, wherein the one or more processors is further configured to identify a feature on the object in response to the second signal.

11. The scanner of claim 10, wherein the feature is a reflective target affixed to the surface.

12. The scanner of claim 10, further comprising:
a light source operably coupled to the tracking camera, the light source being configured to emit light at a predetermined frequency;
wherein the tracking camera includes at least one optical element that allows light of the predetermined frequency to pass through and substantially blocks light of other frequencies; and
wherein the predetermined frequency is in the infrared light spectrum.

13. The scanner of claim 1, wherein the one or more processors are further configured to determine three-dimensional coordinates based at least on part on an amount of time between a first event and a second event, wherein there are no events between the first event and the second event.

14. The scanner of claim 1, wherein the amount of time is based at least in part on a first time stamp of the first event and a second time stamp of the second event, preferably wherein the scanner further comprises an encoder operably coupled to the one or more processors, wherein the encoder measures one of a speed of the object being scanned or the speed of the scanner relative to the object.

15. The scanner of claim 1, wherein a registration of three-dimensional coordinates generated at different timestamps is based at least in part on a relative position between the scanner and an object being measured.
